# EUROPÄISCHE PATENTSCHRIFT

(11) **EP 3 107 681 B1**
(45) Veröffentlichungstag und Bekanntmachung des Hinweises auf die Patenterteilung: **26.12.2018**
(21) Anmeldenummer: 15703535.3
(22) Anmeldetag: 29.01.2015
(51) Int. Cl.: B23K 35/30, B23K 26/14, B23K 35/02, C22C 38/00, C22C 38/02, C22C 38/22, C22C 38/32, C22C 38/38, C22C 38/44, B23K 101/00, B23K 103/04, B23K 26/32, B23K 26/26, C22C 38/06, C22C 38/28, C22C 38/58

(54) **VERFAHREN ZUM LASERSCHWEISSEN EINES ODER MEHRERER WERKSTÜCKE AUS HÄRTBAREM STAHL IM STUMPFSTOSS**
METHOD FOR LASER WELDING ONE OR MORE WORKPIECES OF HARDENABLE STEEL IN A BUTT JOINT CONFIGURATION
PROCÉDÉ DE SOUDAGE AU LASER D'UN JOINT DE SOUDURE EN CONFIGURATION BOUT À BOUT D'UNE OU PLUSIEURS PIÈCES EN ACIER TREMPABLE

(30) Priorität: 17.02.2014 DE 102014001979
(43) Veröffentlichungstag der Anmeldung: 28.12.2016
(73) Patentinhaber: WISCO Tailored Blanks GmbH, 47259 Duisburg (DE)
(72) Erfinder: BREUER, Arndt, 51465 Bergisch-Gladbach (DE); BOTH, Christian, 47119 Duisburg (DE)
(74) Vertreter: Cohausz & Florack
(86) Internationale Anmeldenummer: PCT/EP2015/051780
(87) Internationale Veröffentlichungsnummer: WO 2015/121074

(56) Entgegenhaltungen:
- WO-A1-2012/007663
- WO-A1-2012/007664
- WO-A1-2012/079163
- WO-A1-2013/014481
- DE-A1-102010 018 687
- US-B2- 8 614 008

## Beschreibung

Die Erfindung betrifft ein Verfahren zum Laserschweißen eines oder mehrerer Werkstücke aus presshärtbarem Stahl, insbesondere Mangan-Bor-Stahl, im Stumpfstoß, gemäß dem Oberbegriff des Anspruchs 1.

Ein derartiges Verfahren, bei dem Werkstücke aus presshärtbarem Mangan-Bor-Stahl verwendet werden, die eine Beschichtung auf Basis von Aluminium aufweisen und durch Abtragen ihrer Beschichtung im Randbereich entlang den miteinander zu verschweißenden Stoßkanten vor dem Laserschweißen teilentschichtet werden, ist aus der WO 2013/014481 A1 bekannt.

Maßgeschneiderte Platinen aus Stahlblech (sogenannte Tailored Blanks) werden im Automobilbau verwendet, um hohe Anforderungen an die Crashsicherheit bei möglichst geringem Karosseriegewicht zu erfüllen. Hierzu werden einzelne Platinen oder Bänder unterschiedlicher Werkstoffgüte und/oder Blechdicke im Stumpfstoß durch Laserschweißen zusammengefügt. Auf diese Weise können verschiedene Stellen des fertigen Karosseriebauteils an unterschiedliche Belastungen angepasst werden. So können an Stellen mit hoher Belastung dickeres oder auch höherfestes Stahlblech und an den übrigen Stellen dünnere Bleche oder auch Bleche aus relativ weichen Tiefziehgüten eingesetzt werden. Durch solche maßgeschneiderten Blechplatinen werden zusätzliche Verstärkungsteile an der Karosserie überflüssig. Das spart Material und ermöglicht, das Gesamtgewicht der Karosserie zu reduzieren.

In den letzten Jahren wurden borlegierte Stähle, insbesondere Mangan-Bor-Stähle entwickelt, die beim Warmumformen mit rascher Abkühlung hohe Festigkeiten, beispielsweise Zugfestigkeiten im Bereich von 1500 bis 2000 MPa erreichen. Im Ausgangszustand haben Mangan-Bor-Stähle typischerweise ein ferritisch-perlitisches Gefüge und besitzen Festigkeiten von ca. 600 MPa. Durch Presshärten, d.h. durch Erwärmen auf Austenitisierungstemperatur und anschließendes rasches Abkühlen in der Formpresse kann jedoch ein martensitisches Gefüge eingestellt werden, so dass die so behandelten Stähle Zugfestigkeiten im Bereich von 1500 bis 2000 MPa erreichen können.

Die aus solchen maßgeschneiderten Stahlplatinen hergestellten Karosseriebauteile, beispielsweise B-Säulen, weisen bis zu einer gewissen Blechdicke bzw. einem gewissen Dickensprung einen einwandfreien Härteverlauf auf. Es wurde jedoch festgestellt, dass insbesondere bei einer Blechdicke zwischen 0,5 und 1,8 mm, bzw. auch schon bei einem Dickensprung zwischen 0,2 und 0,4 mm das Problem auftritt, dass die Laserschweißnaht beim Warmumformen (Presshärten) nicht ausreichend aufhärtet. Im Bereich der Schweißnaht ergibt sich dann nur teilweise ein martensitisches Gefüge, so dass es bei Belastung des fertigen Bauteils zu einem Versagen in der Schweißnaht kommen kann. Dieses Problem hängt vermutlich damit zusammen, dass insbesondere bei einem Dickensprung in der Regel kein ausreichender Kontakt zu dem gekühlten Umformwerkzeug bzw. Kühlwerkzeug gewährleistet werden kann und sich dadurch die Schweißnaht nicht vollständig in Martensit umwandeln lässt.

In der US 2008/0011720 A1 ist ein Laser-Lichtbogen-Hybridschweißverfahren beschrieben, bei dem Platinen aus Mangan-Bor-Stahl, die eine Aluminium enthaltende Oberflächenschicht aufweisen, im Stumpfstoß miteinander verbunden werden, wobei der Laserstrahl mit mindestens einem elektrischen Lichtbogen kombiniert ist, um das Metall am Stumpfstoß aufzuschmelzen und die Platinen miteinander zu verschweißen. Der elektrische Lichtbogen wird dabei mittels einer Wolfram-Schweißelektrode abgegeben oder bildet sich bei Verwendung eines MIG-Schweißbrenners an der Spitze eines Zusatzdrahtes. Der Zusatzdraht kann Elemente (z.B. Mn, Ni und Cu) enthalten, welche die Umwandlung des Stahls in ein austenitisches Gefüge induzieren und eine Aufrechterhaltung der austenitischen Umwandlung im Schmelzbad begünstigen. Mit diesem Laser-Lichtbogen-Hybridschweißverfahren soll erreicht werden, dass warmumformbare Platinen aus Mangan-Bor-Stahl, die mit einer Beschichtung auf Aluminium-Silizium-Basis versehen sind, ohne vorherige Entfernung des Beschichtungsmaterials im Bereich der herzustellenden Schweißnaht verschweißt werden können, wobei aber dennoch sichergestellt sein soll, dass an den Stoßkanten der Platinen befindliches Aluminium nicht zu einer Herabsetzung der Zugfestigkeit des Bauteils in der Schweißnaht führt. Durch das Vorsehen eines elektrischen Lichtbogens hinter dem Laserstrahl sollen das Schmelzbad homogenisiert und dadurch örtliche Aluminiumkonzentrationen größer 1,2 Gew.-%, die ein ferritisches Gefüge erzeugen, eliminiert werden. Dieses bekannte Hybridschweißverfahren ist hinsichtlich des Energieverbrauchs aufgrund der Erzeugung des elektrischen Lichtbogens relativ aufwendig.

Der vorliegenden Erfindung liegt die Aufgabe zugrunde, ein Laserschweißverfahren anzugeben, mit dem Werkstücke aus presshärtbarem Stahl, insbesondere Mangan-Bor-Stahl, die eine Dicke zwischen 0,5 und 1,8 mm aufweisen und/oder bei denen am Stumpfstoß ein Dickensprung zwischen 0,2 und 0,4 mm entsteht, zu maßgeschneiderten Werkstücken, insbesondere maßgeschneiderten Platinen, im Stumpfstoß gefügt werden können, deren Schweißnaht sich beim Warmumformen (Presshärten) zuverlässig in ein martenstisches Gefüge aufhärten lässt. Zudem soll sich das Verfahren durch eine hohe Produktivität sowie einen relativ geringen Energieverbrauch auszeichnen.

Zur Lösung diese Aufgabe wird ein Verfahren mit den Merkmalen des Anspruchs 1 vorgeschlagen. Bevorzugte und vorteilhafte Ausgestaltungen des erfindungsgemäßen Verfahrens sind in den Unteransprüchen angegeben.

Das erfindungsgemäße Verfahren dient dem Laserschweißen eines oder mehrerer Werkstücke aus presshärtbarem Stahl, insbesondere Mangan-Bor-Stahl, im Stumpfstoß, bei dem das Werkstück oder die Werkstücke eine Dicke zwischen 0,5 und 1,8 mm, insbesondere zwischen 0,5 und 1,6 mm aufweisen und/oder an dem Stumpfstoß ein Dickensprung zwischen 0,2 und 0,4 mm, insbesondere zwischen 0,2 und 0,3 mm entsteht. Das Laserschweißen erfolgt dabei unter Zuführen von Zusatzdraht in das mit einem Laserstrahl erzeugte Schmelzbad. Der Zusatzdraht enthält mindestens ein Legierungselement aus der Mangan, Chrom, Molybdän, Silizium und/oder Nickel umfassenden Gruppe, das die Bildung von Austentit in dem mit dem Laserstrahl erzeugten Schmelzbad begünstigt, wobei dieses mindestens eine Legierungselement mit einem um mindestens 0,1 Gew.-% größeren Massenanteil im Zusatzdraht vorhanden ist als in dem presshärtbaren Stahl des Werkstückes oder der Werkstücke, und wobei das verwendete Werkstück oder die verwendeten Werkstücke unbeschichtet oder durch Abtragen seiner/ihrer Beschichtung im Randbereich entlang den miteinander zu verschweißenden Stoßkanten vor dem Laserschweißen teilentschichtet ist/sind. Das erfindungsgemäße Verfahren ist ferner dadurch gekennzeichnet, dass der Zusatzdraht folgende Zusammensetzung aufweist:
0,05 - 0,15 Gew.-% C,
0,5 - 2,0 Gew.-% Si,
1,0 - 2,5 Gew.-% Mn,
0,5 - 2,0 Gew.-% Cr + Mo, und
1,0 - 4,0 Gew.-% Ni,
Rest Fe und unvermeidbare Verunreinigungen,
wobei der Zusatzdraht einen um mindestens 0,1 Gew.-% geringeren Kohlenstoff-Massenanteil als der presshärtbare Stahl des Werkstückes oder der Werkstücke aufweist.

Versuche haben gezeigt, dass sich mit einem solchen Zusatzdraht unter Anwendung des erfindungsgemäßen Verfahrens in besonders zuverlässiger Weise eine vollständige Umwandlung der Schweißnaht in ein martensitisches Gefüge beim anschließenden Presshärten sicherstellen lässt. Durch einen relativ niedrigen Kohlenstoffgehalt des Zusatzdrahtes kann eine Versprödung der Schweißnaht verhindert werden. Insbesondere lässt sich durch einen relativ niedrigen Kohlenstoffgehalt des Zusatzdrahtes eine gute Restdehnbarkeit an der Schweißnaht erzielen.

Die erfindungsgemäß hergestellten Werkstücke bzw. maßgeschneiderten Platinen bieten hinsichtlich der Warmumformung (Presshärtung) ein größeres Prozessfenster, in welchem eine ausreichende Aufhärtung des Bauteils, insbesondere auch in dessen Schweißnaht erzielt wird.

Das erfindungsgemäße Verfahren kann nicht nur beim Aneinanderfügen mehrerer Stahlplatinen unterschiedlicher Werkstoffgüte und/oder Blechdicke im Stumpfstoß zum Einsatz kommen, sondern beispielsweise auch beim Laserschweißen eines einzelnen platten- oder bandförmigen Stahlblechs, wobei im letztgenannten Fall die miteinander zu verschweißenden Kanten des Werkstücks durch Umformen, beispielsweise durch Abkanten oder Rollformen, aufeinander zu bewegt werden, so dass sie schließlich einander zugewandt im Stumpfstoß angeordnet sind.

Um die Bildung einer Zunderschicht auf Stahlbänder bzw. Stahlbleche zu verhindern, werden diese üblicherweise mit einer Beschichtung auf Aluminium- oder Aluminium-Silizium-Basis versehen. Das erfindungsgemäße Verfahren kann unter Verwendung solcher beschichteter Stahlplatinen oder Stahlbänder angewandt werden, wobei gemäß einer vorteilhaften Variante des erfindungsgemäßen Verfahrens die Beschichtung auf Aluminium- oder Aluminium-Silizium-Basis im Randbereich entlang den miteinander zu verschweißenden Stoßkanten vor dem Laserschweißen abgetragen wird, so dass das verwendete Werkstück oder die verwendeten Werkstücke teilentschichtet sind. Dies kann mittels mindestens eines Energiestrahls, vorzugsweise eines Laserstrahls erfolgen. Ein mechanisches bzw. hochfrequentes (HF-) Entschichten ist ebenfalls denkbar. Auf diese Weise kann eine Beeinträchtigung der Schweißnaht durch andernfalls darin ungewollt eingebrachtes Beschichtungsmaterial zuverlässig verhindert werden, das beim Warmumformen (Presshärten) zu Einbrüchen im Härteverlauf führen kann bzw. würde.

Unbeschichtete Stahlplatinen oder Stahlbänder können ebenfalls nach dem erfindungsgemäßen Verfahren miteinander verschweißt werden.

In einer bevorzugten Ausgestaltung des erfindungsgemäßen Verfahrens werden das Werkstück bzw. die Werkstücke dahingehend ausgewählt, dass ihr Stahl folgende Zusammensetzung aufweist: 0,16 bis 0,50 Gew.-% C, max. 0,40 Gew.-% Si, 0,50 bis 2,00 Gew.-% Mn, max. 0,025 Gew.-% P, max. 0,010 Gew.-% S,
max. 0,60 Gew.-% Cr, max. 0,50 Gew.-% Mo, max. 0,050 Gew.-% Ti, 0,0008 bis 0,0070 Gew.-% B, und min. 0,010 Gew.-% Al, Rest Fe und unvermeidbare Verunreinigungen. Die aus einem solchen Stahl hergestellten Bauteile weisen nach einem Presshärten eine relativ hohe Zugfestigkeit auf.

Besonders bevorzugt werden in dem erfindungsgemäßen Verfahren platinen- oder bandförmige Werkstücke aus presshärtbarem Stahl verwendet, die nach dem Presshärten eine Zugfestigkeit im Bereich von 1500 bis 2000 MPa aufweisen.

Eine weitere vorteilhafte Ausgestaltung des erfindungsgemäßen Verfahrens sieht vor, dass der Zusatzdraht in erwärmtem Zustand dem Schmelzbad zugeführt wird. Hierdurch lässt sich eine höhere Prozessgeschwindigkeit bzw. eine höhere Produktivität erzielen. Denn bei dieser Ausgestaltung muss mit dem Laserstrahl nicht so viel Energie aufgewendet werden, um den Zusatzdraht zu schmelzen. Vorzugsweise wird der Zusatzdraht vor dem Zuführen in das Schmelzbad zumindest in einem Längenabschnitt auf eine Temperatur von mindestens 50°C erwärmt.

Um eine Versprödung der Schweißnaht zu verhindern, sieht eine weitere bevorzugte Ausgestaltung des erfindungsgemäßen Verfahrens vor, dass das Schmelzbad während des Laserschweißens mit Schutzgas (Inertgas) beaufschlagt wird. Besonders bevorzugt wird dabei als Schutzgas reines Argon, Helium, Stickstoff oder deren Mischung oder ein Gemisch aus Argon, Helium, Stickstoff und/oder Kohlendioxid und/oder Sauerstoff verwendet.

Nachfolgend wird die Erfindung anhand einer Ausführungsbeispiele darstellenden Zeichnung näher erläutert. Es zeigen schematisch:
- Fig. 1: eine perspektivische Ansicht von Teilen einer Vorrichtung zur Durchführung des erfindungsgemäßen Laserschweißverfahrens, wobei zwei im Wesentlichen gleiche dicke, presshärtbare Stahlplatinen im Stumpfstoß miteinander verschweißt werden; und
- Fig. 2: eine perspektivische Ansicht von Teilen einer Vorrichtung zur Durchführung des erfindungsgemäßen Laserschweißverfahrens, wobei hier zwei unterschiedlich dicke, presshärtbare Stahlplatinen im Stumpfstoß miteinander verschweißt werden.

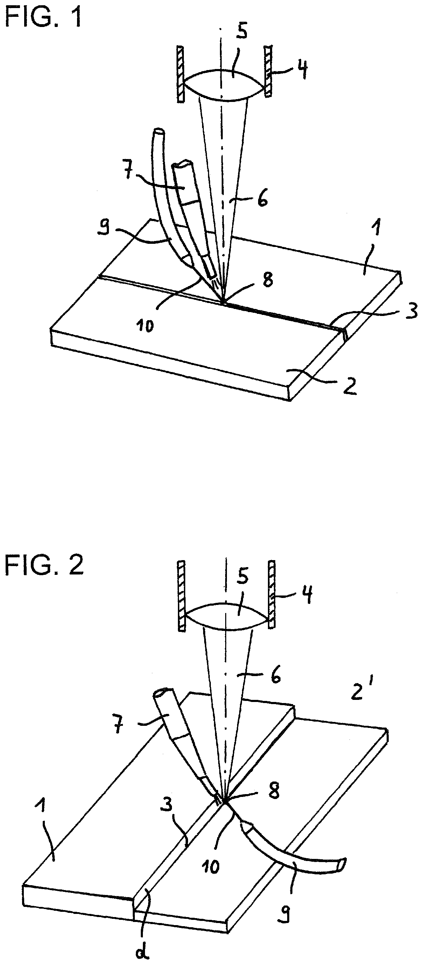

In Fig. 1 ist eine Vorrichtung schematisch dargestellt, mit der ein erfindungsgemäßes Laser-Schweißverfahren durchgeführt werden kann. Die Vorrichtung umfasst eine Unterlage (nicht gezeigt), auf der zwei Bänder oder Platinen 1, 2 aus Stahl unterschiedlicher Werkstoffgüte stumpf entlang des Fügestoßes 3 aneinanderstoßen. Beispielsweise besitzt das eine Werkstück 1 oder 2 eine relativ weiche Tiefziehgüte, während das andere Werkstück 2 bzw. 1 aus höherfestem Stahlblech besteht. Zumindest eines der Werkstücke 1, 2 ist aus presshärtbarem Stahl, beispielsweise aus Mangan-Bor-Stahl hergestellt.

Die Werkstücke 1, 2 sind im Wesentlichen gleich dick. Ihre Dicke beträgt zwischen 0,5 bis 1,8 mm, beispielsweise 1,6 mm.

Oberhalb der Werkstücke 1, 2 ist ein Abschnitt eines Laserschweißkopfes 4 skizziert, der mit einer Optik (nicht gezeigt) zur Zuführung eines Laserstrahls sowie einer Fokussierlinse 5 für den Laserstrahl 6 versehen ist. Des Weiteren ist an dem Laserschweißkopf 4 eine Leitung 7 zur Zuführung von Schutzgas angeordnet. Die Mündung der Schutzgasleitung 7 ist im Wesentlichen auf den Fokusbereich des Laserstrahls 6 bzw. das mit dem Laserstrahl 6 erzeugte Schmelzbad 8 gerichtet. Als Schutzgas wird vorzugsweise reines Argon oder beispielsweise ein Gemisch aus Argon, Helium und/oder Kohlendioxid verwendet. Zudem ist dem Laserschweißkopf 4 eine Drahtzuführungseinrichtung 9 zugeordnet, mittels der dem Schmelzbad 8 ein spezielles Zusatzmaterial in Form eines Drahtes 10 zugeführt wird, das durch den Laserstrahl 6 ebenfalls aufgeschmolzen wird. Der Zusatzdraht 10 wird dem Schmelzbad 8 in erwärmtem Zustand zugeführt. Hierzu ist die Drahtzuführungseinrichtung 9 mit mindestens einem Heizelement (nicht gezeigt), beispielsweise einer den Draht 10 umgebenden Heizspirale ausgestattet. Mit dem Heizelement wird der Zusatzdraht 10 vorzugsweise auf eine Temperatur von mindestens 50°C, besonders bevorzugt auf mindestens 90°C aufgeheizt.

Das in Fig. 2 dargestellte Ausführungsbeispiel unterscheidet sich von dem Ausführungsbeispiel gemäß Fig. 1 dadurch, dass die Werkstücke 1, 2' verschieden dick sind, so dass an dem Stumpfstoß 3 ein Dickensprung d zwischen 0,2 und 0,4 mm, beispielsweise von 0,3 mm vorliegt. Beispielsweise besitzt das eine Werkstück 2' eine Blechdicke im Bereich von 1,2 mm bis 1,3 mm, während das andere Werkstück 1 eine Blechdicke im Bereich von 1,4 mm bis 1,5 mm aufweist. Darüber hinaus können sich die im Stumpfstoß 3 miteinander zu verbindenden Werkstücke 1, 2' auch in ihrer Werkstoffgüte voneinander unterscheiden. Beispielsweise ist die dickere Platine 1 aus höherfestem Stahlblech hergestellt, wohingegen die dünnere Stahlplatine 2' eine relativ weiche Tiefziehgüte besitzt.

Der presshärtbare Stahl, aus dem zumindest eines der miteinander im Stumpfstoß 3 zu verbindenden Werkstücke 1, 2 bzw. 2' besteht, kann beispielsweise folgende chemische Zusammensetzung aufweisen:
max. 0,45 Gew.-% C,
max. 0,40 Gew.-% Si,
max. 2,0 Gew.-% Mn,
max. 0,025 Gew.-% P,
max. 0,010 Gew.-% S,
max. 0,8 Gew.-% Cr + Mo,
max. 0,05 Gew.-% Ti,
max. 0,0050 Gew.-% B, und
min. 0,010 Gew.-% Al,
Rest Fe und unvermeidbare Verunreinigungen.

Die Werkstücke bzw. Stahlplatinen 1, 2 bzw. 2' können unbeschichtet oder mit einer Beschichtung, insbesondere Al-Si-Schicht versehen sein. Im Lieferzustand, d.h. vor einer Wärmebehandlung und schnellen Abkühlung, beträgt die Streckgrenze Re der presshärtbaren Stahlplatinen 1, 2 und/oder 2' vorzugsweise mindestens 300 MPa; ihre Zugfestigkeit Rm beträgt mindestens 480 MPa, und ihre Bruchdehnung A₈₀ liegt bei mindestens 10%. Nach dem Warmumformen (Presshärten), d.h. einem Austenitisieren bei ca. 900 bis 920°C und anschließendem schnellen Abkühlen, weisen diese Stahlplatinen eine Streckgrenze Re von ca. 1.100 MPa, eine Zugfestigkeit Rm von ca. 1.500 bis 2000 MPa und eine Bruchdehnung A₈₀ von ca. 5,0% auf.

Sofern die Werkstücke bzw. Stahlplatinen 1, 2 und/oder 2' mit einer Aluminiumbeschichtung, insbesondere mit einer Al-Si-Beschichtung versehen sind, wird die Beschichtung im Randbereich entlang der miteinander zu verschweißenden Stoßkanten vor dem Laserschweißen abgetragen bzw. teilentschichtet. Gegebenenfalls wird auch an den Stoß- bzw. Schnittkanten 3 anhaftendes Aluminiumbeschichtungsmaterial entfernt. Das Abtragen (Entfernen) des Aluminiumbeschichtungsmaterials kann vorzugsweise mittels mindestens eines Laserstrahls erfolgen.

Der verwendete Zusatzdraht 10 weist beispielsweise folgende chemische Zusammensetzung auf:
0,1 Gew.-% C,
0,8 Gew.-% Si,
1,8 Gew.-% Mn,
0,35 Gew.-% Cr,
0,6 Gew.-% Mo, und
2,25 Gew.-% Ni,
Rest Fe und unvermeidbare Verunreinigungen.

Der Mangan-Gehalt des Zusatzdrahtes 10 ist dabei stets höher als der Mangan-Gehalt der presshärtbaren Werkstücke 1, 2 bzw. 2'. Vorzugsweise liegt der Mangan-Gehalt des Zusatzdrahtes 10 um ca. 0,2 Gew.-% höher als der Mangan-Gehalt der presshärtbaren Werkstücke 1, 2 bzw. 2'. Ferner ist es günstig, wenn auch Gehalt an Chrom und Molybdän des Zusatzdrahtes 10 höher als in den presshärtbaren Werkstücken 1, 2 bzw. 2' ist. Vorzugsweise liegt der kombinierte Chrom-Molybdän-Gehalt des Zusatzdrahtes 10 um ca. 0,2 Gew.-% höher als der kombinierte Chrom-Molybdän-Gehalt der presshärtbaren Werkstücke 1, 2 bzw. 2'. Der Nickelgehalt des Zusatzdrahtes 10 liegt vorzugsweise im Bereich von 1 bis 4 Gew.-%. Zudem weist der Zusatzdraht 10 vorzugsweise einen geringeren Kohlenstoffgehalt auf als der presshärtbare Stahl der Werkstücke 1, 2 bzw. 2'.

## Patentansprüche

1. Verfahren zum Laserschweißen eines oder mehrerer Werkstücke aus presshärtbarem Stahl, insbesondere Mangan-Bor-Stahl, im Stumpfstoß, bei dem das Werkstück oder die Werkstücke (1, 2; 1, 2') eine Dicke zwischen 0,5 und 1,8 mm aufweisen und/oder an dem Stumpfstoß (3) ein Dickensprung (d) zwischen 0,2 und 0,4 mm entsteht, und bei dem das Laserschweißen unter Zuführen von Zusatzdraht (10) in das mit mindestens einem Laserstrahl (6) erzeugte Schmelzbad (8) erfolgt, wobei das Schmelzbad (8) ausschließlich durch den mindestens einen Laserstrahl (6) erzeugt wird, wobei der Zusatzdraht (10) mindestens ein Legierungselement aus der Mangan, Chrom, Molybdän, Silizium und/oder Nickel umfassenden Gruppe enthält, das die Bildung von Austentit in dem mit dem Laserstrahl (6) erzeugten Schmelzbad (8) begünstigt, wobei dieses mindestens eine Legierungselement mit einem um mindestens 0,1 Gew.-% größeren Massenanteil im Zusatzdraht (10) vorhanden ist als in dem presshärtbaren Stahl des Werkstückes oder der Werkstücke (1, 2; 1, 2'), und wobei das verwendete Werkstück oder die verwendeten Werkstücke (1, 2; 1, 2') unbeschichtet oder durch Abtragen seiner/ihrer Beschichtung im Randbereich entlang den miteinander zu verschweißenden Stoßkanten vor dem Laserschweißen teilentschichtet ist/sind, **dadurch gekennzeichnet, dass** der Zusatzdraht (10) folgende Zusammensetzung aufweist:
0,05 - 0,15 Gew.-% C,
0,5 - 2,0 Gew.-% Si,
1,0 - 2,5 Gew.-% Mn,
0,5 - 2,0 Gew.-% Cr + Mo, und
1,0 - 4,0 Gew.-% Ni,
Rest Fe und unvermeidbare Verunreinigungen,
wobei der Zusatzdraht (10) einen um mindestens 0,1 Gew.-% geringeren Kohlenstoff-Massenanteil als der presshärtbare Stahl des Werkstückes oder der Werkstücke (1, 2; 1, 2') aufweist.

2. Verfahren nach Anspruch 1, **dadurch gekennzeichnet, dass** der Stahl des Werkstückes oder der Werkstücke (1, 2; 1, 2') folgende Zusammensetzung aufweist:
0,16 - 0,50 Gew.-% C,
max. 0,40 Gew.-% Si,
0,50 - 2,00 Gew.-% Mn,
max. 0,025 Gew.-% P,
max. 0,010 Gew.-% S,
max. 0,60 Gew.-% Cr,
max. 0,50 Gew.-% Mo,
max. 0,050 Gew.-% Ti,
0,0008 - 0,0070 Gew.-% B, und
min. 0,010 Gew.-% Al,
Rest Fe und unvermeidbare Verunreinigungen.

3. Verfahren nach Anspruch 1 oder 2, **dadurch gekennzeichnet, dass** der Zusatzdraht (10) in erwärmtem Zustand dem Schmelzbad (8) zugeführt wird.

4. Verfahren nach Anspruch 3, **dadurch gekennzeichnet, dass** der Zusatzdraht (10) vor dem Zuführen in das Schmelzbad (8) zumindest in einem Längenabschnitt auf eine Temperatur von mindestens 50°C erwärmt wird.

5. Verfahren nach einem der Ansprüche 1 bis 4, **dadurch gekennzeichnet, dass** das Schmelzbad (8) während des Laserschweißens mit Schutzgas beaufschlagt wird.

6. Verfahren nach Anspruch 5, **dadurch gekennzeichnet, dass** als Schutzgas reines Argon oder ein Gemisch aus Argon und Kohlendioxid verwendet wird.

7. Verfahren nach einem der Ansprüche 1 bis 6, **dadurch gekennzeichnet, dass** das teilentschichtete Werkstück oder die teilentschichteten Werkstücke (1, 2; 1, 2') eine Oberflächenschicht auf Aluminium- oder Aluminium-Silizium-Basis aufweisen.

## Claims

1. Method for laser welding one or more workpieces made of press-hardenable steel, in particular manganese-boron steel, in a butt joint, wherein the workpiece or workpieces (1, 2; 1, 2') have a thickness of between 0.5 and 1.8 mm, and/or a jump in thickness (d) of between 0.2 and 0.4 mm occurs at the butt joint (3), and wherein the laser welding is carried out with the feed of filler wire (10) into the molten bath (8), which is generated by at least one laser beam (6), the molten bath (8) being generated only by the at least one laser beam (6), wherein the filler wire (10) contains at least one alloy element from the group comprising manganese, chromium, molybdenum, silicon and/or nickel, which alloy element promotes the formation of austenite in the molten bath (8) generated by the laser beam (6), said at least one alloy element is present in the filler wire (10) in a mass percentage greater by at least 0.1 wt.% than in the press-hardenable steel of the workpiece or workpieces (1, 2; 1, 2'), and wherein the workpiece or workpieces (1, 2; 1, 2') used is/are non-coated or partially de-coated by ablation of its/their coating before the laser welding in the peripheral region along the abutting edges to be welded together, **characterised in that** the filler wire (10) has the following composition:
0.05 to 0.15 wt.% C,
0.5 to 2.0 wt.% Si,
1.0 to 2.5 wt.% Mn,
0.5 to 2.0 wt.% Cr + Mo, and
1.0 to 4.0 wt.% Ni,
remainder Fe and unavoidable impurities,
wherein the filler wire (10) has a carbon mass percentage which is lower by at least 0.1 wt.% than the press-hardenable steel of the workpiece or workpieces (1, 2; 1, 2').

2. Method according to claim 1, **characterised in that** the steel of the workpiece or workpieces (1, 2; 1, 2') has the following composition:
0.16 to 0.50 wt.% C,
max. 0.40 wt.% Si,
0.50 to 2.00 wt.% Mn,
max. 0.025 wt.% P,
max. 0.010 wt.% S,
max. 0.60 wt.% Cr,
max. 0.50 wt.% Mo,
max. 0.050 wt.% Ti,
0.0008 to 0.0070 wt.% B, and
min. 0.010 wt.% Al,
remainder Fe and unavoidable impurities.

3. Method according to either claim 1 or claim 2, **characterised in that** the filler wire (10) is fed in a heated state to the molten bath (8).

4. Method according to claim 3, **characterised in that** at least a length portion of the filler wire (10) is heated to a temperature of at least 50°C before it is fed into the molten bath (8).

5. Method according to any of claims 1 to 4, **characterised in that** inert gas is applied to the molten bath (8) during laser welding.

6. Method according to claim 5, **characterised in that** the inert gas used is pure argon or a mixture of argon and carbon dioxide.

7. Method according to any of claims 1 to 6, **characterised in that** the partially de-coated workpiece or the partially de-coated workpieces (1, 2; 1, 2') used have a surface layer based on aluminium or on aluminium-silicon.

## Revendications

1. Procédé de soudage au laser d'une ou de plusieurs pièces d'usinage se composant d'un acier pouvant être trempé sous presse, se composant en particulier d'un acier au bore et au manganèse, ledit soudage étant effectué en configuration de joint bout à bout, procédé au cours duquel la pièce d'usinage ou les pièces d'usinage (1, 2; 1, 2') présente(nt) une épaisseur comprise entre 0,5 mm et 1,8 mm et/ou il se forme, au niveau du joint bout à bout (3), une différence d'épaisseur (d) comprise entre 0,2 mm et 0,4 mm, et procédé au cours duquel le soudage au laser est réalisé par l'apport de fil supplémentaire (10) dans le bain de fusion (8) produit avec au moins un rayon laser (6), où le bain de fusion (8) est produit exclusivement par le rayon laser (6) au moins au nombre de un, où le fil supplémentaire (10) contient au moins un élément d'alliage faisant partie du groupe comprenant du manganèse, du chrome, du molybdène, du silicium et/ou du nickel, lequel élément d'alliage favorise la formation d'austénite dans le bain de fusion (8) produit avec le rayon laser (6), où cet élément d'alliage au moins au nombre de un est présent en ayant un pourcentage en masse, dans le fil supplémentaire (10), au moins de 0,1 % en poids supérieur à celui dans l'acier - pouvant être trempé sous presse - de la pièce d'usinage ou des pièces d'usinage (1, 2; 1, 2'), et où la pièce d'usinage utilisée ou les pièces d'usinage utilisées (1, 2; 1, 2') est / sont non recouverte(s) ou bien partiellement décapée(s), avant le soudage au laser, par élimination de son / de leur revêtement dans la zone de bordure le long des bords de jointure à souder l'un à l'autre,
**caractérisé en ce que** le fil supplémentaire (10) présente la composition suivante :
0,05 % - 0,15 % en poids de C,
0,5 % - 2,0 % en poids de Si,
1,0 % - 2,5 % en poids de Mn,
0,5 % - 2,0 % en poids de Cr + Mo, et
1,0 % - 4,0 % en poids de Ni,
le reste se composant de Fe et d'impuretés inévitables,
où le fil supplémentaire (10) présente un pourcentage en masse de carbone au moins de 0,1 % en poids inférieur à celui de l'acier - pouvant être trempé sous presse - de la pièce d'usinage ou des pièces d'usinage (1, 2; 1, 2').

2. Procédé selon la revendication 1, **caractérisé en ce que** l'acier de la pièce d'usinage ou des pièces d'usinage (1, 2; 1, 2') présente la composition suivante :
0,16 % - 0,50 % en poids de C,
au maximum 0,40 % en poids de Si,
0,50 % - 2,00 % en poids de Mn,
au maximum 0,025 % en poids de P,
au maximum 0,010 % en poids de S,
au maximum 0,60 % en poids de Cr,
au maximum 0,50 % en poids de Mo,
au maximum 0,050 % en poids de Ti,
0,0008 % - 0,0070 % en poids de B, et
au minimum 0,010 % en poids de Al,
le reste se composant de Fe et d'impuretés inévitables.

3. Procédé selon la revendication 1 ou 2, **caractérisé en ce que** le fil supplémentaire (10) est fourni à l'état chaud au bain de fusion (8).

4. Procédé selon la revendication 3, **caractérisé en ce que** le fil supplémentaire (10), avant d'être fourni au bain de fusion (8), est chauffé à une température d'au moins 50°C sur au moins une partie de la longueur dudit fil supplémentaire.

5. Procédé selon l'une quelconque des revendications 1 à 4, **caractérisé en ce que** le bain de fusion (8) est alimenté en gaz protecteur au cours du soudage au laser.

6. Procédé selon la revendication 5, **caractérisé en ce que** l'on utilise, comme gaz protecteur, de l'argon pur ou bien un mélange d'argon et de dioxyde de carbone.

7. Procédé selon l'une quelconque des revendications 1 à 6, **caractérisé en ce que** la pièce d'usinage partiellement décapée ou les pièces d'usinage partiellement décapées (1, 2; 1, 2') présente(nt) une couche de surface à base d'aluminium ou à base de silicium et d'aluminium.
